# EUROPEAN PATENT APPLICATION

(11) **EP 4 543 130 A1**
(43) Date of publication of application: **23.04.2025**
(21) Application number: 23823236.7
(22) Date of filing: 15.06.2023
(51) Int. Cl.: H04W 76/14

(54) **END-TO-END COMMUNICATION ESTABLISHMENT METHOD AND SYSTEM**

(30) Priority: 17.06.2022 CN 202210690253
(71) Applicant: ZTE CORPORATION, Shenzhen, Guangdong 518057 (CN)
(72) Inventor: XU, Wanfu, Shenzhen, Guangdong 518057 (CN); WANG, Mengzhen, Shenzhen, Guangdong 518057 (CN); CHEN, Lin, Shenzhen, Guangdong 518057 (CN); QI, Tao, Shenzhen, Guangdong 518057 (CN)
(74) Representative: Chimini, Francesco
(86) International application number: PCT/CN2023/100530
(87) International publication number: WO 2023/241670

(57) **Abstract**

Embodiments of the present invention provide an end-to-end communication establishment method and system. The method comprises: source user equipment (UE) in a radio resource control connected state determines to establish, by means of a selected relay UE, an end-to-end sidelink with a target LTE; the source UE sends to a base station first request information used for establishing the end-to-end sidelink between the source UE and the target UE, wherein the first request information at least comprises one of an SL-SRB list, an identifier of the target UE, an identifier of the relay UE, and an SL-DRB list; and the source UE receives first configuration information issued by the base station, and establishes the end-to-end sidelink with the target UE by means of the selected relay UE according to the first configuration information.

## Description

### Technical Field

Embodiments of the present disclosure relate to the field of communications, and in particular, to an end-to-end communication establishment method and system.

### Background

With the development of wireless multimedia services, on the one hand, the demand for high data rates and user experience is growing, which poses higher requirements for the system capacity and coverage of traditional cellular networks; on the other hand, applications such as public safety, social networking, local data sharing, and local advertising have increased the demand for discovering nearby people or things and communicating with the people or things (i.e., proximity services).

Traditional based station-centric cellular networks have obvious limitations in supporting high data rates and proximity services, hence, Device-to-Device (D2D) communication technology has emerged in this context. The application of D2D technology can alleviate the burden on cellular networks, reduce the battery consumption of user devices, improve data rates, and enhance the robustness of network infrastructure, which can well meet the requirements of high data rate services and proximity services mentioned above. D2D technology, also known as Proximity Services (ProSe), is a Sidelink (SL) communication, and the interface between devices is the PC5 interface.

In order to support a wider range of applications and services, SL-based relay communication is able to extend coverage and improve power consumption, such as in indoor relay communication, smart agriculture, smart factories, and public safety. There are two main application scenarios for SL relay communication:
1) UE-to-Network relay: Transmission can be performed through the relaying of User Equipment (UE) in weak/zero coverage areas, which allows UE1 with poor signal quality or under zero coverage to communicate with a network through nearby UE2 under network coverage, so as to help operators extend coverage and increase capacity. Herein, UE2 is called UE-to-Network relay, and UE1 is called remote UE.
2) UE-to-UE relay: In the event of an earthquake or emergency, when the cellular network cannot work normally, or to extend the communication range of SL, devices are allowed to communicate with each other through a relay UE, for example, UE3 and UE4 may communicate data through UE5 or multi-hop relay UEs. Herein, UE5 is called UE-to-UE relay.

Since New Radio (NR) SL communication mechanism is significantly different from Long Term Evolution (LTE) SL communication mechanism in terms of various aspects such as frame structure, Quality of Service (QoS) processing, and bearer configuration and establishment, the LTE-based SL relay technology solution is not suitable for 5G/NR systems. When a source UE has poor signal quality or is out of coverage and achieves data forwarding with the network/a target UE through a relay UE, how to enable the source UE communicate with the target UE through the relay UE is a problem that needs to be solved.

### Summary

The embodiments of the present disclosure provide an end-to-end communication establishment method and system, which may at least solve the problem in the related art regarding the communication between a source UE and a target UE through a relay UE.

According to the embodiments of the present disclosure, provided is an end-to-end communication establishment method, including: determining, by a source User Equipment (UE) in a Radio Resource Control (RRC) CONNECTED state, to establish an end-to-end sidelink with a target UE through a relay UE selected; sending, by the source UE to a base station, first request information for establishing the end-to-end sidelink between the source UE and the target UE, wherein the first request information at least includes one of: a Sidelink Signaling Radio Bearer (SL-SRB) list, an identifier of the target UE, an identifier of the relay UE, or a Sidelink Data Radio Bearer (SL-DRB) list; and receiving, by the source UE, first configuration information sent by the base station, and establishing, by the source UE according to the first configuration information, the end-to-end sidelink with the target UE through the relay UE selected.

According to another embodiment of the present disclosure, also provided is an end-to-end communication establishment system, including a source User Equipment (UE) in a Radio Resource Control (RRC) CONNECTED state, a target UE, a relay UE in the RRC CONNECTED state, and a base station, wherein the source UE includes: a determining module, configured to determine to establish an end-to-end sidelink with a target UE through a relay UE selected; a first sending module, configured to send, to a base station, first request information for establishing the end-to-end sidelink between the source UE and the target UE, wherein the first request information at least includes one of: a Sidelink Signaling Radio Bearer (SL-SRB) list, an identifier of the target UE, an identifier of the relay UE, or a Sidelink Data Radio Bearer (SL-DRB) list; and a first receiving module, configured to receive first configuration information sent by the base station, and establishing, by the source UE according to the first configuration information, the end-to-end sidelink with the target UE through the relay UE selected.

According to yet another embodiment of the present disclosure, also provided is a computer readable storage medium. The computer readable storage medium stores a computer program, and the computer program, when executed by a processor, causes the processor to implement operations of any one of the method embodiments.

According to still another embodiment of the present disclosure, also provided is an electronic apparatus, including a memory, a processor, and a computer program stored on the memory and capable of running on the processor, wherein the processor executes the computer program to implement operations of any one of the described method embodiments.

### Brief Description of the Drawings

Fig. 1 is a structural block diagram of an end-to-end communication system according to the embodiments of the present disclosure;
Fig. 2 is a flowchart of an end-to-end communication establishment method according to the embodiments of the present disclosure;
Fig. 3 is a structure diagram of an end-to-end communication establishment system according to an embodiment of the present disclosure;
Fig. 4 is a structural block diagram of an end-to-end communication establishment system according to another embodiment of the present disclosure;
Fig. 5 is a structural block diagram of an end-to-end communication establishment system according to still another embodiment of the present disclosure;
Fig. 6 is a schematic diagram of an end-to-end communication establishment method between a source UE and a relay UE according to the embodiments of the present disclosure;
Fig. 7 is a schematic diagram of an end-to-end communication establishment method between a relay UE and a target UE according to the embodiments of the present disclosure;
Fig. 8 is a schematic diagram of acquiring configuration information by a UE in an RRC INACTIVE state according to the embodiments of the present disclosure;
Fig. 9 is a schematic diagram of feeding back failure of a radio link between a relay UE and a target UE according to the embodiments of the present disclosure;
Fig. 10 is a schematic diagram of a target UE rejecting end-to-end link configuration according to the embodiments of the present disclosure; and
Fig. 11 is a schematic diagram of handover of a connection mode between a relay UE and a target UE according to the embodiments of the present disclosure.

### Detailed Description of the Embodiments

Hereinafter, the embodiments of the present disclosure will be described in detail with reference to the accompanying drawings and in conjunction with the embodiments.

It should be noted that, terms such as "first" and "second" in the specification, claims, and the accompanying drawings of the present disclosure are used to distinguish similar objects, but are not necessarily used to describe a specific sequence or order.

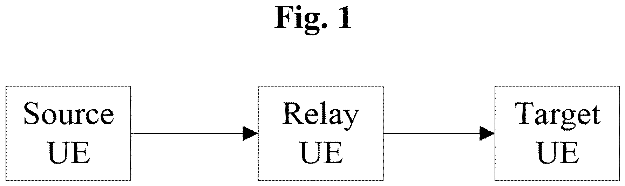

Fig. 1 is a structural block diagram of an end-to-end communication system according to the embodiments of the present disclosure. As shown in Fig. 1, the end-to-end communication establishment system includes a source UE, a relay UE and a target UE. When the source UE is in poor signal quality or outside network coverage, the relay UE may help the source UE to exchange data with the target UE, so as to ensure normal communication between the source UE and the target UE.

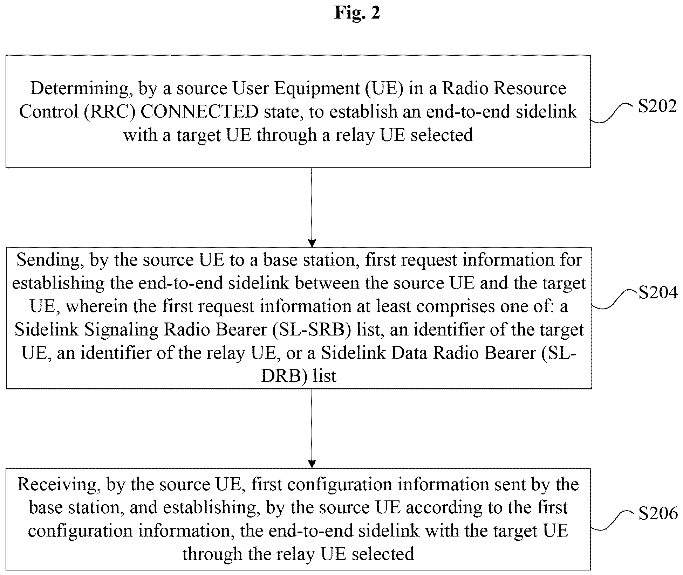

The present embodiment provides an end-to-end communication establishment method running in the described end-to-end communication system. Fig. 2 is a flowchart of an end-to-end communication establishment method according to the embodiments of the present disclosure. As shown in Fig. 2, the flow includes the following operations S202 to S206.

In operation S202, a source User Equipment (UE) in a Radio Resource Control (RRC) CONNECTED state determines to establish an end-to-end sidelink with a target UE through a relay UE selected.

In operation S204, the source UE sends, to a base station, first request information for establishing the end-to-end sidelink between the source UE and the target UE, wherein the first request information at least includes one of: a Sidelink Signaling Radio Bearer (SL-SRB) list, an identifier of the target UE, an identifier of the relay UE, or a Sidelink Data Radio Bearer (SL-DRB) list.

In operation S206, the source UE receives first configuration information sent by the base station, and establishes, according to the first configuration information, the end-to-end sidelink with the target UE through the relay UE selected.

In an exemplary embodiment, the first configuration information at least includes one of an end-to-end sidelink configuration or a link configuration between the source UE and the relay UE.

After operation S204 of this embodiment, the end-to-end communication establishment method may further include the following operations. The source UE receives, from the base station, a first hop configuration of an end-to-end SL-SRB and/or SL-DRB between the source UE and the relay UE. The source UE sends, to the relay UE, second configuration information of the first hop configuration of the end-to-end SL-SRB and/or SL-DRB between the source UE and the relay UE, wherein the second configuration information at least includes one of: a layer-2 identifier of the target UE, a first-hop Sidelink Radio Link Control (SL-RLC) configuration, or a first-hop Signaling Radio Access Protocol (SRAP) configuration. The source UE receives first feedback information sent by the relay UE in responsive to the second configuration information.

In an exemplary embodiment, after the relay UE receives the second configuration information, the end-to-end communication establishment method may further include the following operations. The relay UE in the RRC CONNECTED state sends, to the base station, second request information for establishing an end-to-end SL-SRB and/or SL-DRB between the relay UE and the target UE, wherein the second request information at least includes one of: an SL-SRB list, a layer-2 identifier of the source UE, or an SL-DRB list. The relay UE receives, from the base station, a second hop configuration of the end-to-end SL-SRB and/or SL-DRB between the relay UE and the target UE, wherein the second hop configuration of the end-to-end SL-SRB and/or SL-DRB between the relay UE and the target UE at least includes a layer-2 identifier of the source UE and a layer-2 identifier of the target UE. The relay UE sends, to the target UE, third configuration information of the second hop configuration of the end-to-end SL-SRB and/or SL-DRB between the relay UE and the target UE, wherein the third configuration information at least includes one of: an identifier of the source UE, a second hop SRAP configuration, or a second hop SL-RLC configuration. The relay UE receives second feedback information sent by the target UE in responsive to the third configuration information.

In an exemplary embodiment, the second feedback information is acceptance of the third configuration information or rejection of the third configuration information fed back by the target UE.

In an exemplary embodiment, after the relay UE receives the acceptance of the third configuration information sent by the target UE, the end-to-end communication establishment method may further include an operation of completing establishment of the end-to-end SL-SRB and/or SL-DRB between the source UE and the target UE.

In an exemplary embodiment, after completing establishment of the end-to-end SL-SRB and/or SL-DRB between the source UE and the target UE, the end-to-end communication establishment method may further include the following operations. In a case where the relay UE detects a radio link failure between the target UE and the relay UE, the relay UE notifies the source UE of radio link failure information, wherein the radio link failure information at least includes a layer-2 identifier of the target UE. The source UE reports the received radio link failure information to the base station.

In an exemplary embodiment, after the relay UE receives the rejection of the third configuration information sent by the target UE, the end-to-end communication establishment method may further include the following operations. The relay UE notifies the source UE of configuration failure information, wherein the configuration failure information at least includes a layer-2 identifier of the target UE. The source UE reports the received configuration failure information to the base station.

In an exemplary embodiment, after completing establishment of the end-to-end SL-SRB and/or SL-DRB between the source UE and the target UE, the end-to-end communication establishment method may further include the following operations. In a case where a link between the relay UE and the target UE is handed over from a direct link to an indirect link, the relay UE notifies the source UE of handover of the link between the relay UE and the target UE. The source UE reports the handover of the link to the base station.

In an exemplary embodiment, in a case where the source UE or the relay UE is in an area without coverage, the end-to-end SL-SRB and/or SL-DRB between the source UE and the relay UE, or the end-to-end SL-SRB and/or SL-DRB between the relay UE and the target UE, or the end-to-end SL-SRB and/or SL-DRB between the source UE and the target UE, or the end-to-end sidelink between the source UE and the target UE is established based on a pre-configuration, wherein the pre-configuration at least includes a mapping relationship between a PC5 Quality of Service (QoS) flow and a Sidelink Radio Link Control (SL-RLC); or, in a case where the source UE or the relay UE is in an RRC INACTIVE state or in an RRC IDLE state, the end-to-end SL-SRB and/or SL-DRB between the source UE and the relay UE, or the end-to-end SL-SRB and/or SL-DRB between the relay UE and the target UE, or the end-to-end SL-SRB and/or SL-DRB between the source UE and the target UE, or the end-to-end sidelink between the source UE and the target UE is established based on configuration information of a system information block (SIB12), wherein the system information block at least includes one of: an end-to-end RRC sidelink timer, an end-to-end SL-SRB configuration, or an end-to-end SL-DRB configuration.

By means of the described operations, the source UE acquires, via the first request information, the first configuration information sent by the base station, wherein the first request information at least includes an SL-SRB list, and establishes an end-to-end sidelink between the relay UE selected and the target UE according to the first configuration information. Thus, the problem in the related art regarding the communication between the source UE and the target UE through the relay UE is solved.

Through the description of the foregoing embodiments, those having ordinary skill in the art may clearly understand that the end-to-end communication establishment method according to the foregoing embodiments may be implemented by software in addition to a necessary universal hardware platform, and definitely may also be implemented by hardware. However, in many cases, the former is preferred implementation. Based on such understanding, the essence of the technical solutions of the present disclosure or the part contributing to the related art may be embodied in the form of a software product. The computer software product may be stored in a storage medium (such as a Read-Only Memory (ROM), a Random Access Memory (RAM), a magnetic disk, and an optical disk), which includes several instructions for instructing a terminal device (which may be a mobile phone, a computer, a server, a network device, or the like) to perform the end-to-end communication establishment methods described in the embodiments of the present disclosure.

An end-to-end communication establishment system is also provided in the embodiments of the present disclosure. The end-to-end communication establishment system is used for implementing the described embodiments and exemplary implementations, and what has been described will not be elaborated repeatedly. The term "module", as used hereinafter, is a combination of software and/or hardware capable of realizing a predetermined function. Although the apparatus described in the following embodiments is preferably implemented by software, implementation of hardware or a combination of software and hardware is also possible and conceived.

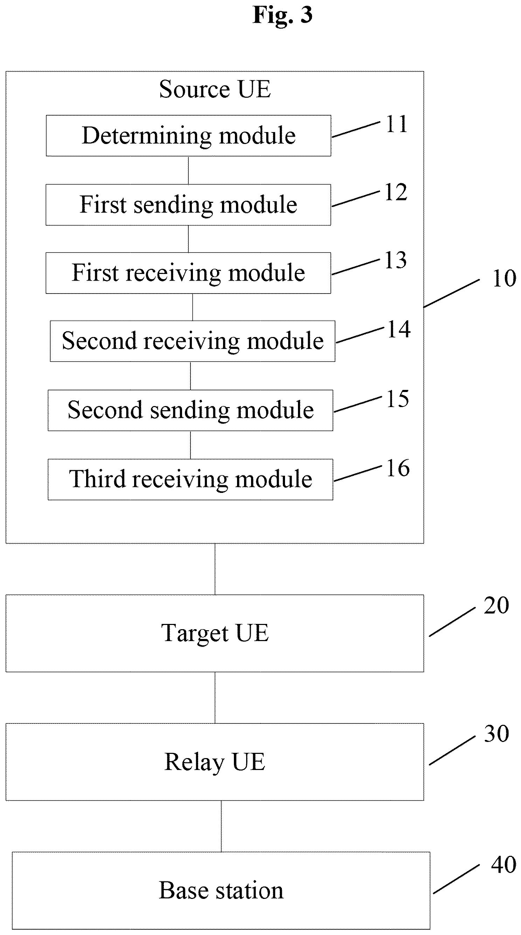

Fig. 3 is a structure diagram of an end-to-end communication establishment system according to an embodiment of the present disclosure. As shown in Fig. 3, the end-to-end communication establishment system includes a source User Equipment (UE) 10 in an RRC CONNECTED state, a target UE 20, a relay UE 30 in an RRC CONNECTED state, and a base station 40, wherein the source UE 10 includes:
a determining module 11, configured to determine to establish an end-to-end sidelink with a target UE through a relay UE selected;
a first sending module 12, configured to send, to a base station, first request information for establishing the end-to-end sidelink between the source UE and the target UE, wherein the first request information at least includes one of: a Sidelink Signaling Radio Bearer (SL-SRB) list, an identifier of the target UE, an identifier of the relay UE, or a Sidelink Data Radio Bearer (SL-DRB) list;
a first receiving module 13, configured to receive first configuration information sent by the base station, and establishing, by the source UE according to the first configuration information, the end-to-end sidelink with the target UE through the relay UE selected;
a second receiving module 14, configured to receive, from the base station, a first hop configuration of an end-to-end SL-SRB and/or SL-DRB between the source UE and the relay UE;
a second sending module 15, configured to send, to the relay UE, second configuration information of the first hop configuration of the end-to-end SL-SRB and/or SL-DRB between the source UE and the relay UE, wherein the second configuration information at least includes one of: a layer-2 identifier of the target UE, a first-hop Sidelink Radio Link Control (SL-RLC) configuration, or a first-hop Signaling Radio Access Protocol (SRAP) configuration; and
a third receiving module 16 is configured to receive first feedback information sent by the relay UE in responsive to the second configuration information.

In an exemplary embodiment, the first configuration information at least includes one of an end-to-end sidelink configuration or a link configuration between the source UE and the relay UE.

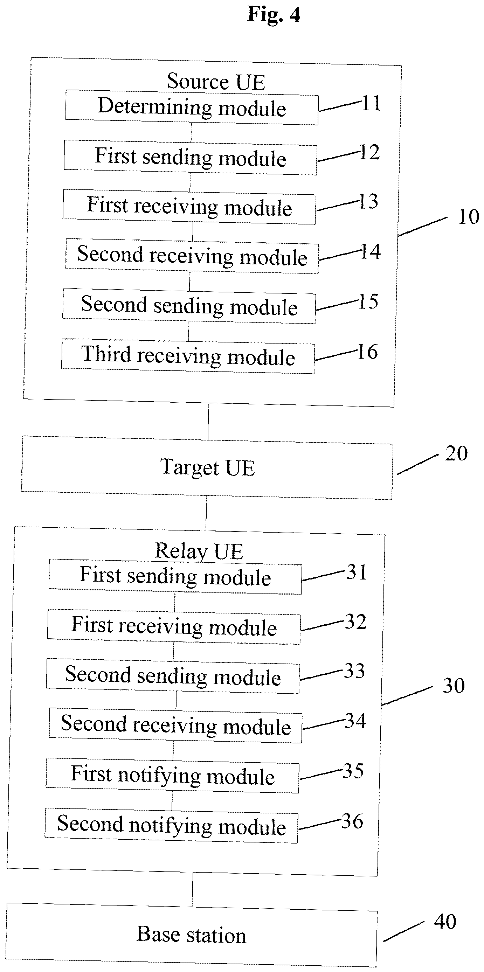

Fig. 4 is a structural block diagram of an end-to-end communication establishment system according to another embodiment of the present disclosure. As shown in Fig. 4, the base station includes:
a first sending module 21, configured to send the first hop configuration of the end-to-end SL-SRB and/or SL-DRB between the source UE and the relay UE; and
a second sending module 22, configured to send, to the relay UE, the second hop configuration of the end-to-end SL-SRB and/or SL-DRB between the relay UE and the target UE.

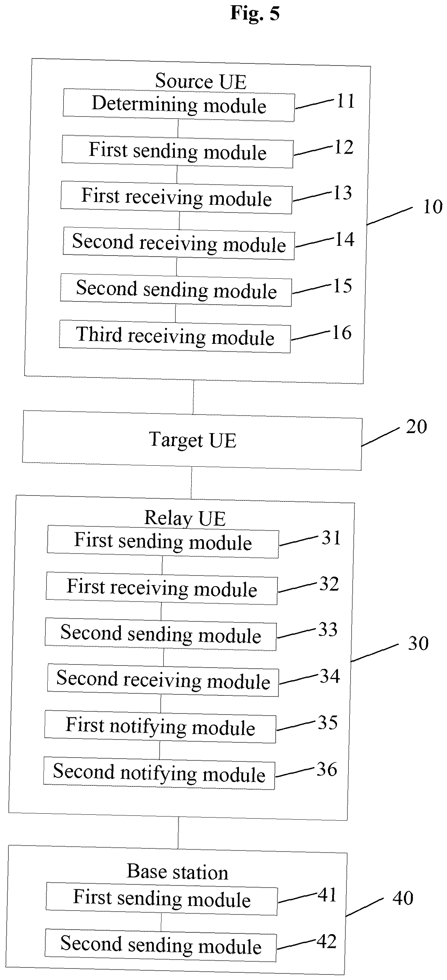

Fig. 5 is a structural block diagram of an end-to-end communication establishment system according to still another embodiment of the present disclosure. As shown in Fig. 5, the relay UE includes:
a first sending module 31, configured to send second request information for establishing an end-to-end SL-SRB and/or SL-DRB between the relay UE and the target UE, wherein the second request information at least includes one of: an SL-SRB list, a layer-2 identifier of the source UE, or an SL-DRB list;
a first receiving module 32, configured to receive, from the base station, a second hop configuration of the end-to-end SL-SRB and/or SL-DRB between the relay UE and the target UE, wherein the second hop configuration of the end-to-end SL-SRB and/or SL-DRB between the relay UE and the target UE at least includes a layer-2 identifier of the source UE and a layer-2 identifier of the target UE;
a second sending module 33, configured to send, to the target UE, third configuration information of the second hop configuration of the end-to-end SL-SRB and/or SL-DRB between the relay UE and the target UE, wherein the third configuration information at least includes one of: an identifier of the source UE, a second hop SRAP configuration, or a second hop SL-RLC configuration;
a second receiving module 34, configured to receive second feedback information sent by the target UE in responsive to the third configuration information;
a first notifying module 35, configured to notify, in a case where a link between the relay UE and the target UE is switched from a direct link to an indirect link, the source UE of handover of the link between the relay UE and the target UE, so that the source UE reports the handover of the link to the base station; and
a second notifying module 36, configured to notify, in a case where the relay UE receives rejection of the third configuration information sent by the target UE, the source UE of configuration failure information, so that the source UE reports the configuration failure information to the base station, wherein the configuration failure information at least includes a layer-2 identifier of the target UE.

It should be noted that each module may be implemented by software or hardware. The latter may be implemented in the following manner, but is not limited thereto. All the modules are located in a same processor; alternatively, the modules are located in different processors in an arbitrary combination.

To facilitate understanding of the technical solutions provided by the present disclosure, the technical solutions are described in detail as follows with reference to the embodiments of exemplary scenarios.

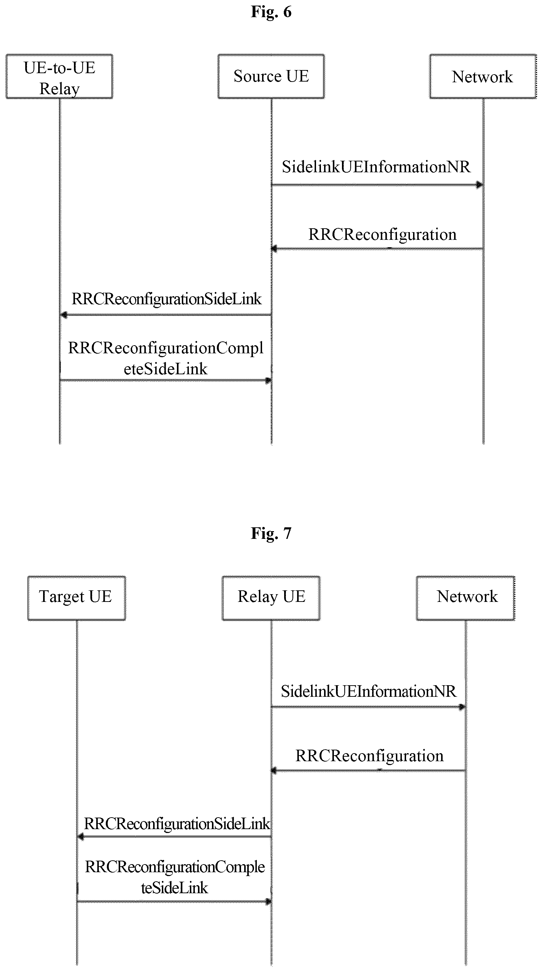

Fig. 6 is a schematic diagram of an end-to-end communication establishment method between a source UE and a relay UE according to the embodiments of the present disclosure. The end-to-end communication establishment method includes the following operations S601 to S604.

In operation S601, a source UE sends request information to a base station so as to establish an end-to-end SL signalling bearer link with the target base station, wherein the request information at least includes an SL-SRB list.

In operation S602, the base station sends a one-hop configuration between the source UE and the relay UE to the source UE.

In operation S603, the relay UE receives configuration information sent by the source UE and sends a feedback to the source UE.

In operation S604, after receiving the feedback from the relay UE, the source UE sends related signaling information of end-to-end SL-SRB and/or SL-DRB to the relay UE, wherein the related information at least includes an L2 ID of the target UE.

Fig. 7 is a schematic diagram of an end-to-end communication establishment method between a relay UE and a target UE according to the embodiments of the present disclosure. The end-to-end communication establishment method includes the following operations S701 to S704.

In operation S701, a relay UE sends request information to a base station, so as to establish an end-to-end SL-SRB link with a target UE, wherein the request information at least includes an L2 ID of the source UE of an end-to-end SL-SRB and/or SL-DRB.

In operation S702, after receiving the request information sent by the relay UE, the base station sends one-hop configuration between the relay UE and the relay target UE to the relay UE, wherein the one-hop configuration at least includes an L2 ID of the source UE and an L2 ID of the target UE of the end-to-end SL-SRB and/or SL DRB.

In operation S703, the target UE receives the configuration information sent by the relay UE and sends to the relay UE a feedback in responsive to the received configuration information.

In operation S704, the relay UE sends related configuration information of the end-to-end SL-SRB and/or SL-DRB to the target UE.

In this embodiment, the UE in the RRC IDLE state establishes the end-to-end SL-SRB and/or SL-DRB between the source UE and the relay UE, or establishes the end-to-end SL-SRB and/or SL-DRB between the relay UE and the target UE, or establishes the end-to-end SL-SRB and/or SL-DRB between the source UE and the target UE, or establishes the end-to-end sidelink between the source UE and the target UE through pre-configuration, wherein the pre-configuration includes a mapping relationship from a PC5 Quality of Service (QoS) flow to a Sidelink Radio Link Control (SL-RLC).

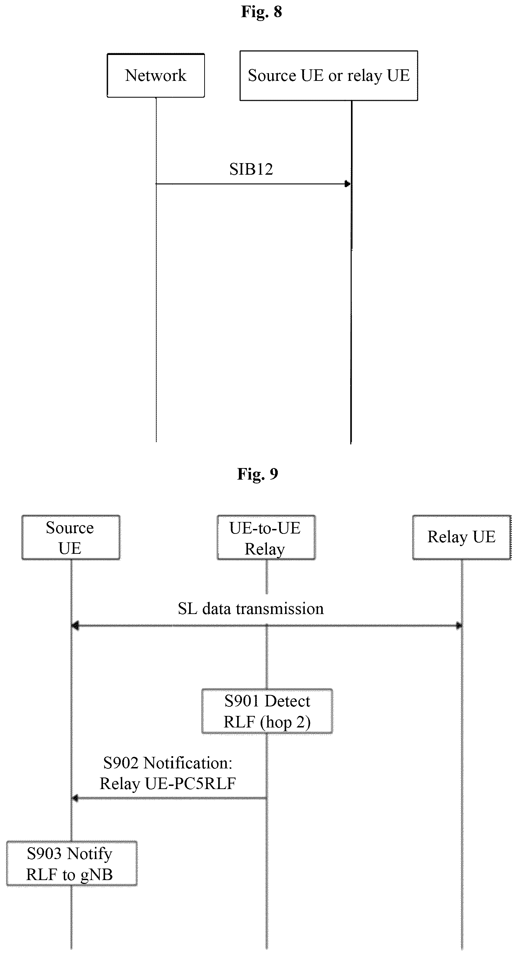

Fig. 8 is a schematic diagram of acquiring configuration information by a UE in an RRC INACTIVE state according to the embodiments of the present disclosure. Specifically, a UE in an RRC INACTIVE state establishes an end-to-end SL-SRB and/or SL-DRB between a source UE and a relay UE, or establishes an end-to-end SL-SRB and/or SL-DRB between the relay UE and a target UE, or establishes an end-to-end SL-SRB and/or SL-DRB between the source UE and the target UE, or establishes an end-to-end sidelink between the source UE and the target UE by means of a system information block (SIB 12), wherein the system information block includes a timer used for an end-to-end RRC Reconfiguration Sidelink, and a value of the timer at least includes 3000ms and 4000ms.

In this embodiment, the source UE maps a corresponding relationship between end-to-end SL-DRBs of the same QoS flow and the SL-RLCs of the corresponding hops.

Fig. 9 is a schematic diagram of feeding back failure of a radio link between a relay UE and a target UE according to the embodiments of the present disclosure. The feedback of the radio link failure between the relay UE and the target UE includes the following operations S901 to S903.

In operation S901, the relay UE detects an RLF between the target UE and the relay UE.

In operation S902, the relay UE notifies the source UE of RLF, wherein information of the RLF includes at least an L2 ID of the target UE.

In operation S903, the source UE reports to the gNB the RLF between the relay UE and the target UE.

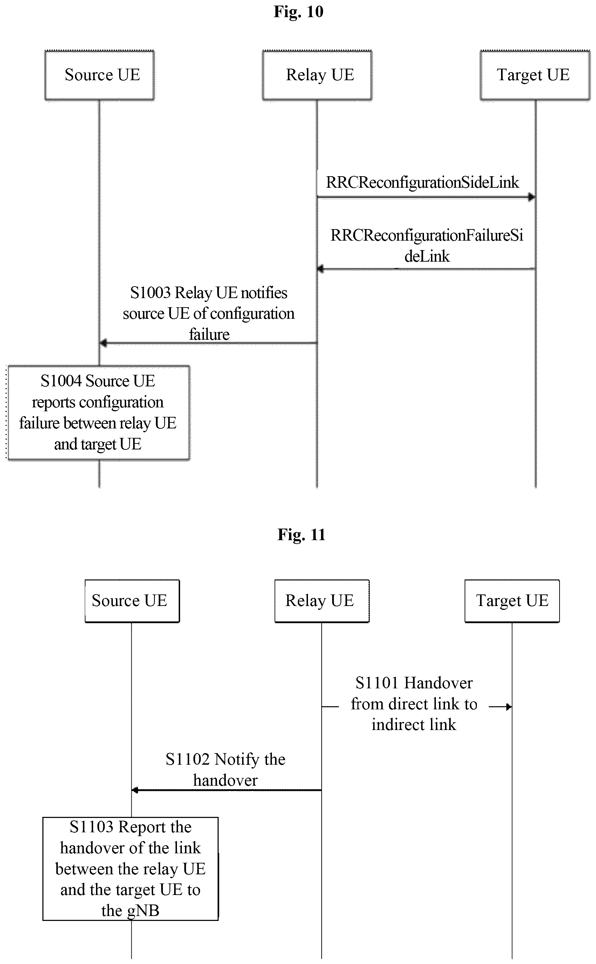

Fig. 10 is a schematic diagram of a target UE rejecting end-to-end link configuration according to the embodiments of the present disclosure. The target UE rejects the end-to-end link configuration by the following operations S1001 to S1004.

In operation S1001, a relay UE sends, to the target UE, one-hop configuration of an SRAP layer and an RLC of an end-to-end SL-SRB and/or SL-DRB between the relay UE and the target UE.

In operation S1002, the target UE rejects the configuration, and sends an RRCReconfigurationFailureSidelink message to the relay UE.

In operation S1003, the relay UE notifies the source UE that the configuration fails, and the notification information at least contains L2 ID information of the target UE.

In operation S1004, the source UE reports to the base station that the configuration between the relay UE and the target UE fails.

Fig. 11 is a schematic diagram of handover of a connection mode between a relay UE and a target UE according to the embodiments of the present disclosure. The handover includes the following operations S1101 to S1103.

In operation S1101, connection between the relay UE and the target UE is handed over from a direct connection to an indirect connection.

In operation S1102, the relay UE notifies the source UE of the handover.

In operation S1103, the source UE reports handover information of the relay UE to the base station.

The embodiments of the present disclosure further provide a computer readable storage medium. The computer readable storage medium stores a computer program, and the computer program, when executed by a processor, causes the processor to implement operations of any one of the method embodiments.

In an exemplary embodiment, the computer readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure also provide an electronic apparatus, including a memory, a processor, and a computer program stored on the memory and capable of running on the processor, wherein the processor executes the computer program to implement operations of any of the described method embodiments.

In an exemplary embodiment, the electronic apparatus may further include a transmission device and an input/output device, wherein the transmission device is connected to the processor, and the input/output device is connected to the processor.

For specific implementations in this embodiment, reference may be made to the implementations described in the foregoing embodiments and exemplary embodiments, and details are not repeatedly described in this embodiment.

Obviously, those having ordinary skill in the art should understand that each module or each operation of the described embodiments of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. Thus, the present disclosure is not limited to any specific combination of hardware and software.

The above description is only the exemplary embodiments of the present disclosure, and is not intended to limit the present disclosure. For those having ordinary skill in the art, the present disclosure may have various modifications and variations. Any modifications, equivalent replacements, improvements and the like made within the principle of the present disclosure shall belong to the protection scope of the present disclosure.

## Claims

1. An end-to-end communication establishment method, comprising:
determining, by a source User Equipment, UE, in a Radio Resource Control, RRC, CONNECTED state, to establish an end-to-end sidelink with a target UE through a relay UE selected;
sending, by the source UE to a base station, first request information for establishing the end-to-end sidelink between the source UE and the target UE, wherein the first request information at least comprises one of: a Sidelink Signaling Radio Bearer, SL-SRB, list, an identifier of the target UE, an identifier of the relay UE, or a Sidelink Data Radio Bearer, SL-DRB, list; and
receiving, by the source UE, first configuration information sent by the base station, and establishing, by the source UE according to the first configuration information, the end-to-end sidelink with the target UE through the relay UE selected.

2. The end-to-end communication establishment method according to claim 1, wherein the first configuration information at least comprises one of an end-to-end sidelink configuration or a link configuration between the source UE and the relay UE.

3. The end-to-end communication establishment method according to claim 1, wherein after the sending, by the source UE to a base station, first request information for establishing the end-to-end sidelink between the source UE and the target UE, the end-to-end communication establishment method further comprises:
receiving, by the source UE from the base station, a first hop configuration of an end-to-end SL-SRB and/or SL-DRB between the source UE and the relay UE;
sending, by the source UE to the relay UE, second configuration information of the first hop configuration of the end-to-end SL-SRB and/or SL-DRB between the source UE and the relay UE, wherein the second configuration information at least comprises one of: a layer-2 identifier of the target UE, a first-hop Sidelink Radio Link Control, SL-RLC, configuration, or a first-hop Signaling Radio Access Protocol, SRAP, configuration; and
receiving, by the source UE, first feedback information sent by the relay UE in responsive to the second configuration information.

4. The end-to-end communication establishment method according to claim 3, wherein after the relay UE receives the second configuration information, the end-to-end communication establishment method further comprises:
sending, by the relay UE in the RRC CONNECTED state to the base station, second request information for establishing an end-to-end SL-SRB and/or SL-DRB between the relay UE and the target UE, wherein the second request information at least comprises one of: an SL-SRB list, a layer-2 identifier of the source UE, or an SL-DRB list;
receiving, by the relay UE from the base station, a second hop configuration of the end-to-end SL-SRB and/or SL-DRB between the relay UE and the target UE, wherein the second hop configuration of the end-to-end SL-SRB and/or SL-DRB between the relay UE and the target UE at least comprises a layer-2 identifier of the source UE and a layer-2 identifier of the target UE;
sending, by the relay UE to the target UE, third configuration information of the second hop configuration of the end-to-end SL-SRB and/or SL-DRB between the relay UE and the target UE, wherein the third configuration information at least comprises one of: an identifier of the source UE, a second hop SRAP configuration, or a second hop SL-RLC configuration; and
receiving, by the relay UE, second feedback information sent by the target UE in responsive to the third configuration information.

5. The end-to-end communication establishment method according to claim 4, wherein the second feedback information is acceptance of the third configuration information or rejection of the third configuration information fed back by the target UE.

6. The end-to-end communication establishment method according to claim 5, wherein after the relay UE receives the acceptance of the third configuration information sent by the target UE, the end-to-end communication establishment method further comprises:
completing establishment of the end-to-end SL-SRB and/or SL-DRB between the source UE and the target UE.

7. The end-to-end communication establishment method according to claim 6, wherein after the completing establishment of the end-to-end SL-SRB and/or SL-DRB between the source UE and the target UE, the end-to-end communication establishment method further comprises:
in a case where the relay UE detects a radio link failure between the target UE and the relay UE, notifying, by the relay UE, the source UE of radio link failure information, wherein the radio link failure information at least comprises a layer-2 identifier of the target UE; and
reporting, by the source UE, the received radio link failure information to the base station.

8. The end-to-end communication establishment method according to claim 5, wherein after the relay UE receives the rejection of the third configuration information sent by the target UE, the end-to-end communication establishment method further comprises:
notifying, by the relay UE, the source UE of configuration failure information, wherein the configuration failure information at least comprises a layer-2 identifier of the target UE; and
reporting, by the source UE, the received configuration failure information to the base station.

9. The end-to-end communication establishment method according to claim 6, wherein after the completing establishment of the end-to-end SL-SRB and/or SL-DRB between the source UE and the target UE, the end-to-end communication establishment method further comprises:
in a case where a link between the relay UE and the target UE is handed over from a direct link to an indirect link, notifying, by the relay UE, the source UE of handover of the link between the relay UE and the target UE; and
reporting, by the source UE, the handover of the link to the base station.

10. The end-to-end communication establishment method according to claims 1-9, wherein
in a case where the source UE or the relay UE is in an area without coverage, the end-to-end SL-SRB and/or SL-DRB between the source UE and the relay UE, or the end-to-end SL-SRB and/or SL-DRB between the relay UE and the target UE, or the end-to-end SL-SRB and/or SL-DRB between the source UE and the target UE, or the end-to-end sidelink between the source UE and the target UE is established based on a pre-configuration, wherein the pre-configuration at least comprises a mapping relationship between a PC5 Quality of Service, QoS, flow and a Sidelink Radio Link Control, SL-RLC; or,
in a case where the source UE or the relay UE is in an RRC INACTIVE state or in an RRC IDLE state, the end-to-end SL-SRB and/or SL-DRB between the source UE and the relay UE, or the end-to-end SL-SRB and/or SL-DRB between the relay UE and the target UE, or the end-to-end SL-SRB and/or SL-DRB between the source UE and the target UE, or the end-to-end sidelink between the source UE and the target UE is established based on configuration information of a system information block, SIB12, wherein the system information block at least comprises one of: an end-to-end RRC sidelink timer, an end-to-end SL-SRB configuration, or an end-to-end SL-DRB configuration.

11. An end-to-end communication establishment system, comprising a source User Equipment, UE, in a Radio Resource Control, RRC, CONNECTED state, a target UE, a relay UE in the RRC CONNECTED state, and a base station, wherein the source UE comprises:
a determining module, configured to determine to establish an end-to-end sidelink with a target UE through a relay UE selected;
a first sending module, configured to send, to a base station, first request information for establishing the end-to-end sidelink between the source UE and the target UE, wherein the first request information at least comprises one of: a Sidelink Signaling Radio Bearer, SL-SRB, list, an identifier of the target UE, an identifier of the relay UE, or a Sidelink Data Radio Bearer, SL-DRB, list; and
a first receiving module, configured to receive first configuration information sent by the base station, and establishing, by the source UE according to the first configuration information, the end-to-end sidelink with the target UE through the relay UE selected.

12. The end-to-end communication establishment system according to claim 11, wherein the first configuration information at least comprises one of an end-to-end sidelink configuration or a link configuration between the source UE and the relay UE.

13. The end-to-end communication establishment system according to claim 11, wherein the source UE further comprises:
a second receiving module, configured to receive, from the base station, a first hop configuration of an end-to-end SL-SRB and/or SL-DRB between the source UE and the relay UE;
a second sending module, configured to send, to the relay UE, second configuration information of the first hop configuration of the end-to-end SL-SRB and/or SL-DRB between the source UE and the relay UE, wherein the second configuration information at least comprises one of: a layer-2 identifier of the target UE, a first-hop Sidelink Radio Link Control, SL-RLC, configuration, or a first-hop Signaling Radio Access Protocol, SRAP, configuration; and
a third receiving module, configured to receive first feedback information sent by the relay UE in responsive to the second configuration information.

14. The end-to-end communication establishment system according to claim 11, wherein the relay UE comprises:
a first sending module, configured to send second request information for establishing an end-to-end SL-SRB and/or SL-DRB between the relay UE and the target UE, wherein the second request information at least comprises one of: an SL-SRB list, a layer-2 identifier of the source UE, or an SL-DRB list;
a first receiving module, configured to receive, from the base station, a second hop configuration of the end-to-end SL-SRB and/or SL-DRB between the relay UE and the target UE, wherein the second hop configuration of the end-to-end SL-SRB and/or SL-DRB between the relay UE and the target UE at least comprises a layer-2 identifier of the source UE and a layer-2 identifier of the target UE;
a second sending module, configured to send, to the target UE, third configuration information of the second hop configuration of the end-to-end SL-SRB and/or SL-DRB between the relay UE and the target UE, wherein the third configuration information at least comprises one of: an identifier of the source UE, a second hop SRAP configuration, or a second hop SL-RLC configuration; and
a second receiving module, configured to receive second feedback information sent by the target UE in responsive to the third configuration information.

15. The end-to-end communication establishment system according to claim 11, wherein the base station comprises:
a first sending module, configured to send the first hop configuration of the end-to-end SL-SRB and/or SL-DRB between the source UE and the relay UE.

16. The end-to-end communication establishment system according to claim 15, wherein the base station further comprises:
a second sending module, configured to send, to the relay UE, the second hop configuration of the end-to-end SL-SRB and/or SL-DRB between the relay UE and the target UE.

17. The end-to-end communication establishment system according to claim 14, wherein the relay UE further comprises:
a first notifying module, configured to notify, in a case where a link between the relay UE and the target UE is switched from a direct link to an indirect link, the source UE of handover of the link between the relay UE and the target UE, so that the source UE reports the handover of the link to the base station.

18. The end-to-end communication establishment system according to claim 14, wherein the relay UE further comprises:
a second notifying module, configured to notify, in a case where the relay UE receives rejection of the third configuration information sent by the target UE, the source UE of configuration failure information, so that the source UE reports the configuration failure information to the base station, wherein the configuration failure information at least comprises a layer-2 identifier of the target UE.

19. A computer readable storage medium, wherein the computer readable storage medium stores a computer program, and the computer program, when executed by a processor, causes the processor to implement operations of the end-to-end communication establishment method according to any one of claims 1 to 10.

20. An electronic apparatus, comprising a memory, a processor, and a computer program stored on the memory and capable of running on the processor, wherein the processor executes the computer program to implement operations of the end-to-end communication establishment method according to any one of claims 1 to 10.
